**Europäisches Patentamt**

**European Patent Office**

**Office européen des brevets**

(11) Numéro de publication: **0 142 428**
**B1**

# FASCICULE DE BREVET EUROPÉEN

(45) Date de publication du fascicule du brevet:
**15.10.86**

(51) Int. Cl.⁴: **B 60 N 1/06**

(21) Numéro de dépôt: **84402229.3**

(22) Date de dépôt: **06.11.84**

(54) **Mécanisme d'inclinaison pour siège, et notamment pour siège d'automobile.**

(30) Priorité: **16.11.83 FR 8318225**

(43) Date de publication de la demande:
**22.05.85 Bulletin 85/21**

(45) Mention de la délivrance du brevet:
**15.10.86 Bulletin 86/42**

(84) Etats contractants désignés:
**BE DE GB IT LU NL SE**

(56) Documents cité:
**FR-A-2 377 175**
**FR-A-2 420 319**

(73) Titulaire: **CYCLES PEUGEOT Société dite:,
Beaulieu, F-25700 Valentigney (FR)**

(72) Inventeur: **Fourrey, François, Rue du Petit
Chênois, F-25200 Montbeliard (FR)**
Inventeur: **Perrissin Fabert, Jean, 58 rue sous la
côte, F-25350 Manbeure (FR)**

(74) Mandataire: **Moncheny, Michel, c/o Cabinet
Lavoix 2 Place d'Estienne d'Orves, F-75441 Paris
Cedex 09 (FR)**

LIBER, STOCKHOLM 1986

Description

La présente invention concerne un mécanisme d'inclinaison du type à réglage discontinu ou par crantage, c'est-à-dire un mécanisme dans lequel un secteur denté est solidaire du dossier du siège tandis qu'un autre secteur est monté coulissant de façon à verrouiller le premier ou à en être écarté pour permettre son pivotement.

La fabrication de mécanismes de ce genre suppose actuellement l'empilement ou mise en place relative des différentes pièces, puis leur fixation par rivetage, soudage, sertissage ou boulonnage. Par suite, cette fabrication nécessite deux opérations successives. En outre elle est délicate, car il est nécessaire que les organes de fixation soient susceptibles de résister éventuellement à des chocs, par exemple lors d'un freinage brusque ou d'un accident.

La présente invention a pour but de supprimer ces inconvénients en réalisant un mécanisme dont la fabrication soit simplifiée tandis que sa résistance aux chocs ou analogues, est accrue.

L'invention se rapporte donc à un mécanisme de réglage de l'inclinaison du dossier d'un siège et notamment d'un siège de véhicule, comportant de façon connue deux flasques, l'un mobile, fixé au dossier et l'autre fixe, fixé à l'assise du siège, portant chacun un secteur denté, et des moyens de commande du déplacement de l'un de ces secteurs entre une position en prise avec l'autre secteur (de verrouillage de l'articulation) et une position écartée de pivotement du dossier. Dans le mécanisme selon l'invention, les diverses pièces sont assemblées entre elles par simple emboîtement et maintenues par un boîtier qui est lui-même retenu latéralement par un ressort de redressement du dossier monté entre le flasque mobile et un point fixe du boîtier voisin de l'extrémité du flasque fixe, opposée au flasque mobile.

Dans un tel mécanisme, le montage s'effectue automatiquement par simple mise en place et emboîtement des pièces les unes par rapport aux autres, sans opérations supplémentaire.

De préférence, l'une au moins des pièces à assembler, et notamment le flasque fixe, comporte des pions et/ou taquets de centrage, tandis que la ou les autres pièces comportent des trous ou lumières de forme correspondante, qui s'emboîtent sur ces pions ou taquets.

De préférence, les taquets et pions sont tirés dans l'épaisseur de la tôle qui constitue la pièce, ce qui permet à celle-ci de présenter une grande résistance et facilite la réalisation.

La description ci-dessous d'un mode de réalisation donné à titre d'exemple non limitatif, et représenté sur le dessin annexé, fera d'ailleurs ressortir les avantages et caractéristiques de l'invention.

Sur ce dessin:

— la fig. 1 est une vue de côté d'un méchanisme d'inclinaison selon l'invention;

— la fig. 2 est une vue éclatée du mécanisme de la figure 1;
— la fig. 3 montre l'assemblage des flasques fixe et mobile entre eux, en élévation, vu du côté opposé à celui de la figure 1;
— les fig. 4 et 5 sont des vues à plus grande échelle du mécanisme d'inclinaison de la figure 1 avant la mise en place des ressorts et du boîtier de protection, respectivement en position de verrouillage et en position de pivotement du dossier.

Le mécanisme de réglage de l'inclinaison comporte, de la manière habituelle, un flasque 1 fixé au dossier du siège qui doit être réglé, et un flasque 2 fixé à l'assise de ce même siège.

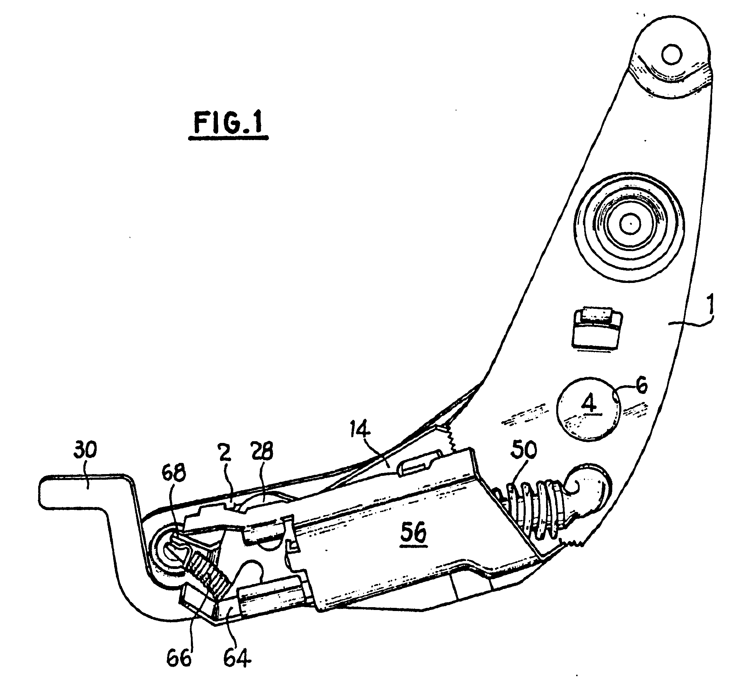

Comme le montrent les dessins, et tout particulièrement les figures 1, 2 et 3, le flasque fixe 2 comporte un pion de centrage 4 qui est tiré dans l'épaisseur de la tôle qui le constitue, c'est-à-dire qui fait saillie sur l'une des faces du flasque, tandis qu'un évidement est formé sur la face opposée. Le flasque mobile 1 comporte, lui, un trou 6 de diamètre analogue à celui du pion 4 qui est destiné, lors du montage du mécanisme, à venir s'emboîter sur ce pion, comme le montre la figure 1. Le flasque 1 comporte également une patte 8 découpée et repoussée ver l'extérieur, en direction du flasque fixe 2. Cette patte immobilise latéralement l'extrémité correspondante du flasque fixe 2, qui peut facilement être emboîtée entre elle et la flasque mobile 1 par pivotement autour du pion 4.

Le flasque fixe 2 comporte par ailleurs deux taquets incurvés, respectivement 10 et 12, sur lesquels vient s'emboîter un cliquet plat 14 comportant des lumières 16 et 18, également incurvées. La courbure des lumières 16 et 18 correspond à celle des taquets 10 et 12 mais leur longueur est supérieure à celle de ces taquets de sorte qui le cliquet 14 peut coulisser parallèlement à lui-même sur le flasque fixe 2 en étant guidé par les taquets 10 et 12 et en restant en contact avec le flasque 2.

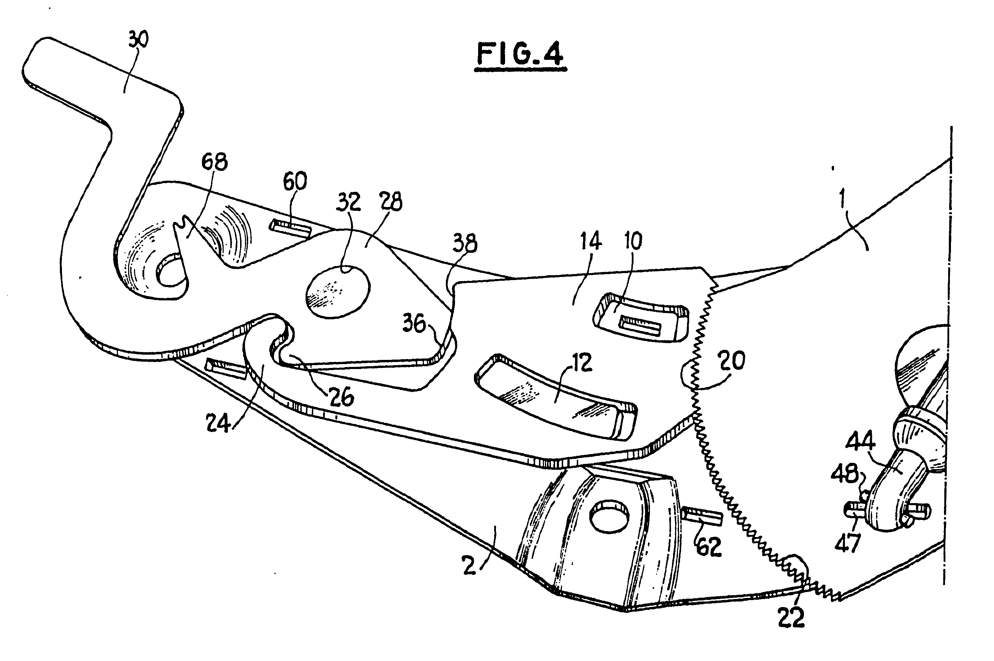

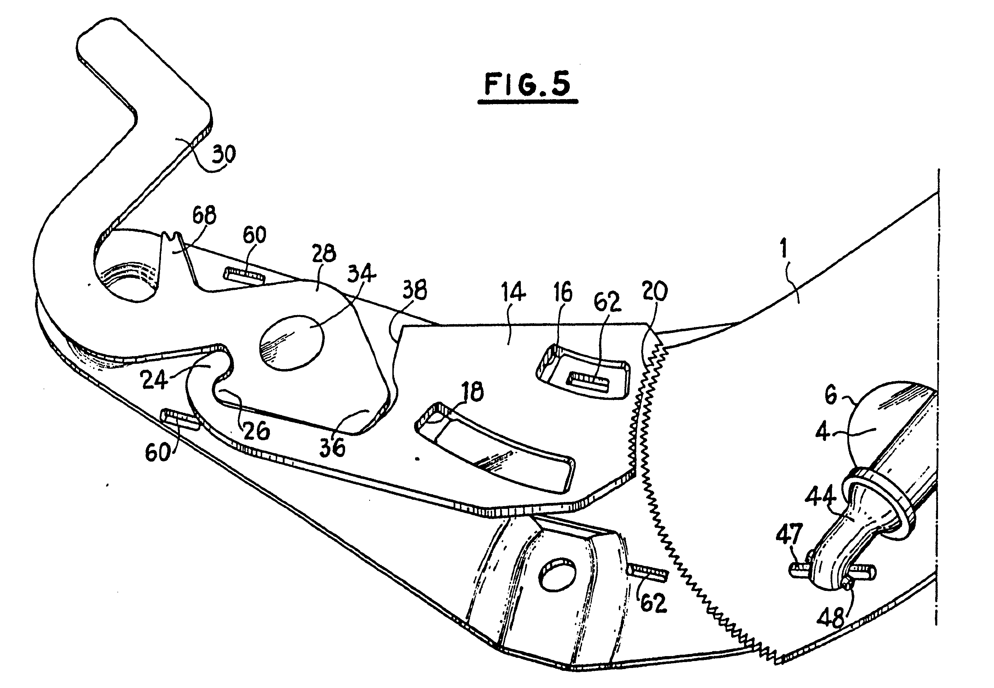

Le cliquet 14 comporte également un secteur denté 20 qui est susceptible de venir en prise avec une denture 22 portée par le bord extrême du flasque mobilel. Les dentures 20 et 22 ont des courbures correspondantes, de sorte qu'elles peuvent engrener dans toutes les positions angulaires de l'un ou l'autre de ces deux organes. Grâce au jeu prévu entre les taquets 10, 12 et les lumières 16, 18, le cliquet 14 peut ainsi être verrouillé sur le flasque 1 (fig. 4) ou éloigné de la denture 22 de ce flasque, ainsi que le montre la figure 5.

Pour faciliter ce déplacement, le cliquet 14 est prolongé par un crochet 24 qui coopère avec le bec 26 d'une came 28 formée à l'extrémité d'un levier de commande 30. Le levier 30 comporte, sensiblement au centre de la came 28, un trou 32 qui permet son emboîtement sur un pion de pivotement 34 solidaire du flasque 2 et, de préférence, tiré dans l'épaisseur de ce flasque. La came 28 comporte par ailleurs une surface incurvée 36 qui vient en contact avec une rampe 38, de forme correspondante, du cliquet 14 dans la position de verrouillage du levier 30 représentée sur la figure 4. Dans cette position, en effet, le bec 26 de la came 28 est dégagé du crochet 24, tandis que la surface 36 appuie sur la rampe 38 pour repousser le cliquet 14 contre la denture 22 et verrouiller le flasque 1.

Au contraire, lors d'un pivotement du levier dans le sens des aiguilles d'une montre en considérant les dessins, la surface 36 guide la rampe 38 tandis que le bec 26 vient appuyer sur le crochet 24 et le tirer, ce qui entraîne le cliquet 14 et éloigne le secteur denté 20 de le denture 22. Par suite, la flasque 1 se trouve libéré et peut pivoter librement autour du pion 4, ainsi que le montre la figure 5.

Le flasque mobile 1 comporte par ailleurs un trou 40 qui, lors du montage, se trouve en regard d'une lumière incurvée 42 du flasque fixe 2, la lumière 42 étant centrée sur l'axe de pivotement du flasque 1, c'est-à-dire sur l'axe du pion de centrage 4. Un tube coudé 44 est introduit dans le trou 40, de façon à pénétrer à l'intérieur de la lumière 42. Le tube 44 est immobilisé par rapport au flasque mobile 1 grâce à deux paires d'ergots diamétralement opposés, respectivement 46 et 48, espacées axialement sur ce tube mais décalées l'une par rapport à l'autre. Les pions 46 les plus proches de l'extrémité du tube 44 traversent des prolongements latéraux 47 du trou 40, tandis que les pions 48 sont arrêtés par la paroi de ce trou, comme le montrent clairement les figures 4 et 5 sur lesquelles le tube 44 a été représenté en position écartée pour faciliter la compréhension du dessin. La dimension des ergots 46 est toutefois telle qu'ils peuvent se déplacer dans la lumière 42 lors du pivotement du flasque 1. La longueur de la lumière 42 règle, par suite, l'angle dont est susceptible de pivoter ce flasque 1.

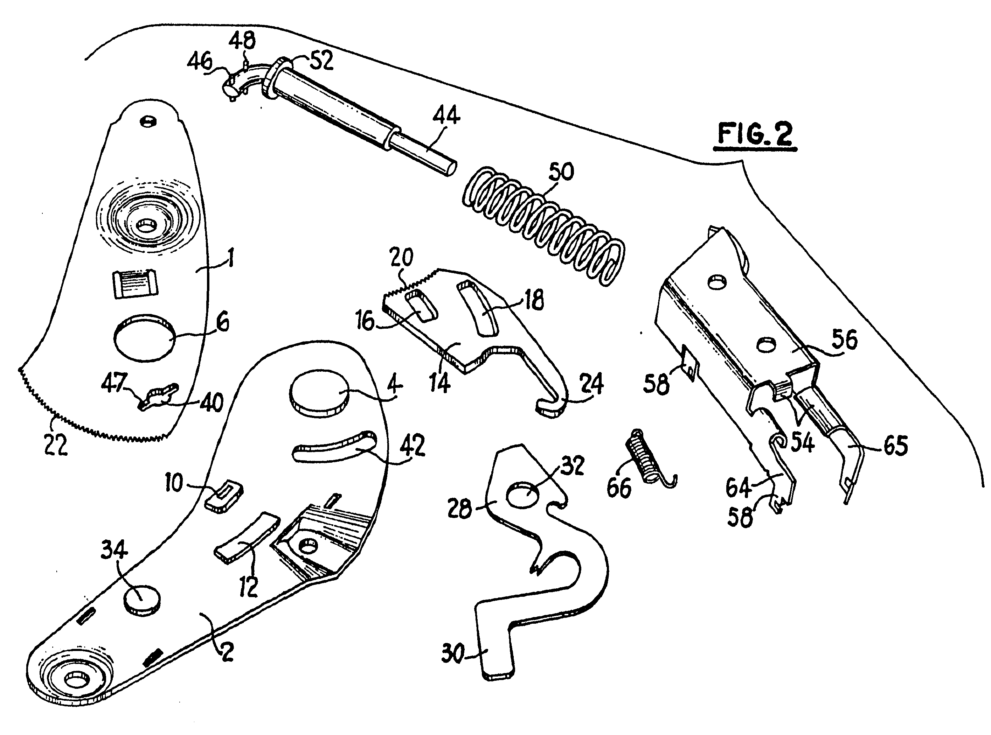

Sur le tube 44 est enfilé un ressort hélicoïdal 50 qui est en appui, à une extrémité sur une collerette 52 du tube et, à son extrémité opposée, sur des pattes 54 portées par l'extrémité d'un boîtier 56 (fig. 1 et 2). Le boîtier 56, qui a une forme générale en U, est muni d'ergots 58 destinés à pénétrer dans des fentes 60, 62 pratiquées dans le flasque 2, d'une part au voisinage de son extrémité opposée au flasque 1, et d'autre part à proximité de ce flasque 1. Par suite, le boîtier 56 s'étend au-dessus des différentes pièces du mécanisme et il en est de même du ressort 50. Ce ressort est ainsi tendu entre le flasque 1 et le boîtier 56. Celui-ci applique la came 28 du levier 30, ainsi que le cliquet 14, contre le flasque fixe 2. Le ressort 50 pousse également le boîtier 56 contre ce même flasque pendant que le boîtier assure, lui, la protection extérieure de l'ensemble.

Par ailleurs, le ressort 50 étant fixé sur la collerette 52 du tube 44, lequel est monté dans un trou 40 percé au voisinage de la denture 22 et du bord extérieur du flasque, exerce en permanence sur la base du flasque mobile 1 une pression qui tend à redresser le dossier, solidaire de ce flasque, dans la position verticale.

Le boîtier 56 est prolongé, au-delà des pattes 54 d'appui du ressort 50, par des bras 64 qui sont terminés chacun par un ergot 58, et dont l'un au moins est percé d'un trou 65 de fixation de l'extrémité d'un petit ressort 66, dont l'extrémité opposée est accrochée à une fourche 68 en saillie latéralement sur le bras 30 (fig. 1 et 5). Le ressort 66 tire la fourche 68 vers le boîtier 56 et le levier 30 vers la position de verrouillage représentée sur la figure 4, ce que entraîne le coulissement du cliquet 14 le long des taquets de guidage 10 et 12 et assure le blocage du flasque 1 et, par suite, du dossier dans la position choisie. Un simple effort sur le levier 30 contre l'action de ce ressort 66 permet toutefois de libérer le flasque 1 et de modifier l'inclinaison du dossier, le levier 30 reprenant automatiquement la position de verrouillage dès qu'il est libéré.

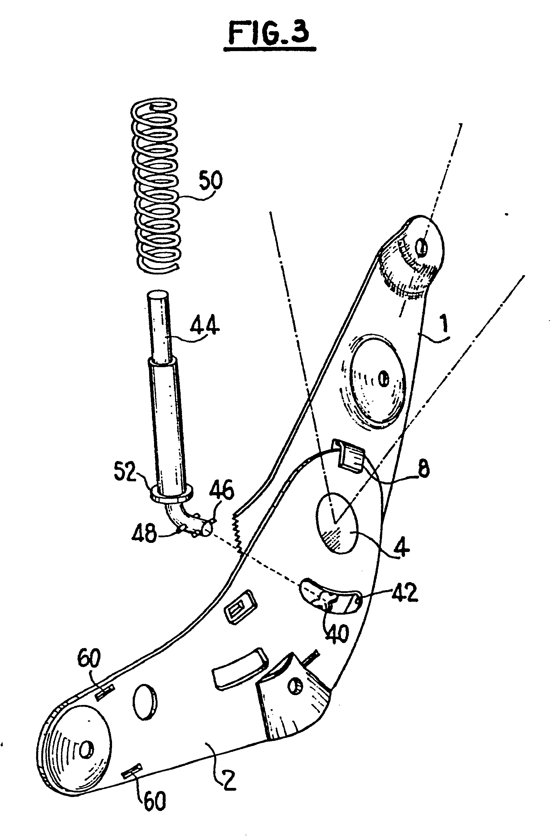

Pour assembler un tel mécanisme, il suffit d'emboîter les diverses pièces les unes sur les autres. En effet, les flasques 1 et 2 sont d'abord réunis en emboîtant le pion 4 dans le trou 6 du flasque 1, puis en faisant pivoter les deux flasques pour glisser le bord du flasque 2 sous la patte 8 (fig. 3). Le cliquet 14 est posé sur le flasque 2, ses lumières 16, 18, s'emboîtant sur les taquets incurvés 10 et 12 qui le centrent exactement en direction transversale en lui permettant un déplacement longitudinal limité. Le levier 30 est ensuite monté sur le pion 34, de façon que la came 28 se place en regard du crochet 24. L'introduction du tube 44 dans les trou 40 et lumière 42, puis le montage du boîtier 56 par enfoncement de ses ergots 58 dans les fentes 60, 62, et blocage de ses pattes 54 contre le ressort 50, achèvent ensuite le maintien latéral de toutes ces pièces. Le ressort 66 est alors mis en place entre la fourche 68 et le bras 64 du boîtier, et le mécanisme est prêt à fonctionner.

Le seul empilement avec emboîtement des pièces a été nécessaire; aucune opération complémentaire de fixation ne doit être effectuée.

On obtient donc un mécanisme d'inclinaison qui fonctionne de manière extrêmement sûre et ne comporte ni boulon, ni rivet, ni organe susceptible de se rompre lors d'un choc ou analogue. Par contre, les pièces qui composent le mécanisme sont nettement centrées les unes par rapport aux autres et efficacement guidées entre elles.

**Revendications**

1. Mécanisme de réglage de l'inclinaison du dossier d'un siège, et notamment d'un siège de véhicule, comportant deux flasques, l'un mobile (1) fixe au dossier et l'autre fixe (2) fixé à l'assise du siège, et solidaires chacun d'un secteur denté (22, 20), et des moyens de commande (14, 30) du déplacement de l'un de ces secteurs entre une position en prise avec l'autre secteur, de verrouillage du dossier, et une position écartée de pivotement du dossier, caractérisé en ce que les diverses pièces du mécanisme (1, 2, 14, 30) sont assemblées entre elles par simple emboîtement et maintenues par un boîtier (56) qui est retenu latéralement par un ressort (50) de redressement du dossier monté entre le flasque mobile (1) et un point (54) du boîtier (56) voisin de l'extrémité du flasque fixe (2) opposée au flasque mobile (1).

2. Mécanisme suivant la revendication 1, caractérisé en ce qu'au moins le flasque fixe (2) comporte des pions et/ou taquets de centrage (4, 34, 10, 12), tandis que les autres pièces du mécanisme comportent des trous ou lumières (6, 16, 18, 32, 60, 62) de forme correspondante, qui s'emboîtent sur ces pions ou taquets.

3. Mécanisme suivant l'une des revendications 1 et 2, caractérisé en ce que les taquets et pions (4, 34, 10, 12) sont tirés dans l'épaisseur de la tôle qui constitue la flasque (2).

4. Mécanisme suivant l'une des revendications 1 à 3, caractérisé en ce que le boîtier (56) est maintenu par des ergots (58) sur le flasque fixe (2), le ressort de redressement (50) étant protégé par ce boîtier et fixé sur celui-ci.

5. Mécanisme suivant l'une des revendications 1 à 4, caractérisé en ce que le secteur denté mobile (20) est formé sur un cliquet (14) comportant des lumières allongées (16, 18) s'emboîtant sur des taquets (10, 12) du flasque fixe, mais plus longues que ces taquets, de sorte que le cliquet est susceptible de coulisser sur ce dernier.

6. Mécanisme suivant la revendication 5, caractérisé en ce que le cliquet (14) comporte une surface de came (24, 38) destinée à recevoir l'extrémité d'un levier de commande (30).

7. Mécanisme suivant la revendication 6, caractérisé en ce que le levier de commande (30) comporte une came (28) qui forme, d'une part un bec (26) de déverrouillage du cliquet, et d'autre part un rampe (36) de poussée du cliquet en position de verrouillage.

8. Mécanisme suivant l'une des revendications 1 à 7, caractérisé en ce qu'il comporte un ressort (66) de rappel du mécanisme en position de verrouillage.

9. Mécanisme suivant la revendication 8, caractérisé en ce que le ressort (66) est monté entre une fourche (68) du levier de commande et le boîtier de protection (56).

10. Mécanisme suivant l'une des revendications 6 à 9, caractérisé en ce que le came (28) du levier de commande est emboîtée et pivote sur le pion de centrage (34) solidaire du flasque (2).

**Patentansprüche**

1. Mechanismus zur Neigungseinstellung der Rückenlehne eines Sitzes, insbesondere eines Kraftwagensitzes mit zwei Wangen, von denen die eine, bewegliche (1) an der Rückenlehne und die andere, ortsfeste (2) am Unterteil des Sitzes befestigt und beide mit je einem Zahnsektor (22, 20) verbunden sind, und mit Betätigungsmitteln (14, 30) zur Verschiebung eines dieser Sektoren zwischen einer Eingriffsstellung mit dem anderen Sektor zur Verriegelung der Rückenlehne und einer hiervon getrennten Stellung zur Verschwenkung der Rückenlehne, dadurch gekennzeichnet, daß die verschiedenen Stücke des Mechanismus (1, 2, 14, 30) durch einfaches Ineinanderfügen untereinander verbunden und durch ein Gehäuse (56) gehalten sind, welches seitlich durch eine Aufrichtfeder (50) der Rückenlehne festgehalten ist, wobei diese Feder zwischen der beweglichen Wange (1) und einem Punkt (54) des Gehäuses (56) angeordnet ist, der in der Nähe des der beweglichen Wange (1) gegenüberliegenden Endes der ortsfesten Wange (2) liegt.

2. Mechanismus nach Anspruch 1, dadurch gekennzeichnet, daß wenigstens die ortsfeste Wange (2) Zentrierzapfen und/oder -keile (4, 34, 10, 12) umfaßt, während die anderen Stücke des Mechanismus Löcher oder Ausnehmungen (6, 16, 18, 32, 60, 62) entsprechender Form umfassen, welche diese Zapfen oder Keile umschließen.

3. Mechanismus nach einem der Ansprüche 1 und 2, dadurch gekennzeichnet, daß die Keile und Zapfen (4, 34, 10, 12) in der Dicke des die Wange (2) bildenden Bleches gezogen sind.

4. Mechanismus nach einem der Ansprüche 1 bis 3, dadurch gekennzeichnet, daß das Gehäuse (56) durch Nasen (58) an der ortsfesten Wange (2) gehalten ist, wobei die Aufrichtfeder (50) durch das Gehäuse abgedeckt und an diesem befestigt ist.

5. Mechanismus nach einem der Ansprüche 1 bis 4, dadurch gekennzeichnet, daß der bewegliche Zahnsektor (20) an einer Klinke (14) ausgebildet ist, welche längliche, die Keile (10, 12) der ortsfesten Wange umschließende Ausnehmungen aufweist, die jedoch länger als die Keile sind derart, daß die Klinke befähigt ist, auf letzterer zu gleiten.

6. Mechanismus nach Anspruch 5, dadurch gekennzeichnet, daß die Klinke (14) eine Nockenfläche (24, 38) umfaßt, die dazu bestimmt ist, ein Ende eines Betätigungshebels (30) aufzunehmen.

7. Mechanismus nach Anspruch 6, dadurch gekennzeichnet, daß der Betätigungshebel (30) eine Nocke (28) umfaßt, die einerseits einen Verriegelungsschnabel (26) für die Klinke und andererseits eine Rampe (36) bildet, durch welche die Klinke in Verriegelungsstellung gestoßen wird.

8. Mechanismus nach einem der Ansprüche 1 bis 7, dadurch gekennzeichnet, daß er eine Feder (66) umfaßt, die den Mechanismus in Verriegelungsstellung vorspannt.

9. Mechanismus nach Anspruch 8, dadurch gekennzeichnet, daß die Feder (66) zwischen einer Gabel (68) des Betätigungshebels und dem Abdeckgehäuse (56) angeordnet ist.

10. Mechanismus nach einem der Ansprüche 6 bis 9, dadurch gekennzeichnet, daß die Nocke (28) des Betätigungshebels auf den mit der Wange (2) verbundenen Zentrierzapfen (34) aufgepaßt und auf diesem Zapfen verschwenkbar ist.

**Claims**

1. A mechanism for adjusting the inclination of the backrest of a seat structure, and in particular of a vehicle seat structure, comprising two side walls, one (1) being movable and fixed to the backrest and the other (2) being fixed and fixed to the seat of the seat structure, and each side wall being connected to a toothed sector (22, 20), and means (14, 30) for controlling the displacement of one of these sectors between a position of engagement with the other sector for locking the backrest, and a spaced-away position for the pivoting of the backrest, characterised in that the various component parts of the mechanism (1, 2, 14, 30) are assembled together by a simple fitting together and maintenance by a housing (56) which is retained laterally by a spring (50) for swinging up the backrest mounted between the movable side wall (1) and a point (54) of the housing (56) in the vicinity of the end of the fixed side wall (2) opposed to the movable side wall (1).

2. A mechanism according to claim 1, characterised in that at least the fixed side wall (2) comprises centering bosses and/or projections (4, 34, 10, 12), while the other component parts of the mechanism comprise openings or slots (6, 16, 18, 32, 60, 62) of corresponding shape which fit on these bosses or projections.

3. A mechanism according to one of the claims 1 and 2 characterised in that the projections or bosses (4, 34, 10, 12) are taken from the thickness of the metal sheet from which the side wall (2) is made.

4. A mechanism according to one of the claims 1 to 3, characterised in that the housing (56) is maintained by lugs (58) on the fixed side wall (2), the swinging-up spring (50) being protected by this housing and fixed to the latter.

5. A mechanism according to one of the claims 1 to 4, characterised in that the movable toothed sector (20) is formed on a catch (14) defining elongated slots (16, 18) fitting on the projections (10, 12) of the fixed side wall but being longer than these projections so that the catch is slidable on the fixed side wall.

6. A mechanism according to claim 5, characterised in that the catch (14) includes a cam surface (24, 38) adapted to receive the end of a control lever (30).

7. A mechanism according to claim 6, characterised in that the control lever (30) includes a cam (28) which forms, on one hand, a nose portion (26) for unlocking the catch, and, on the other hand, a ramp (36) for urging the catch into the locking position.

8. A mechanism according to one of the claims 1 to 7, characterised in that it comprises a spring (66) for returning the mechanism to the locking position.

9. A mechanism according to claim 8, characterised in that the spring (66) is mounted between a fork (68) of the control lever and the protecting housing (56).

10. A mechanism according to one of the claims 6 to 9, characterised in that the cam (28) of the control lever is fitted, and pivots, on the centering boss (34) integral with the side wall (2).

FIG.1

FIG.2

# FIG.3

# FIG.4

0 142 428

FIG.5